# EUROPEAN PATENT APPLICATION

(11) **EP 1 865 707 A2**
(43) Date of publication of application: **12.12.2007**
(21) Application number: 07102386.5
(22) Date of filing: 14.02.2007
(51) Int. Cl.: H04N 1/46

(54) **Halftoning apparatus and method**

(30) Priority: 05.06.2006 KR 20060050456
(71) Applicant: SAMSUNG ELECTRONICS CO., LTD., Suwon-si, Gyeonggi-do (KR)
(72) Inventor: Lee, Hae-kee, Gyeonggi-do, Suwon-si (KR)
(74) Representative: Waddington, Richard

(57) **Abstract**

A halftoning method and apparatus to create second image data having available gradations of first through (M+1)^{th} output gradations, where M is an integer equal to or greater than 2, by halftoning first image data includes a calculator (330) to calculate a trend of change of first through M^{th} dithering gradations, where *a`^{h}* dithering gradation < (*a*+1)*^{th}* dithering gradation, and calculate a ratio of a difference between the first image data and the first dithering gradation to a difference between the M^{th} dithering gradation and the first image data, a first halftoning unit (310) to compare the first image data to the first dithering gradation and generate a first control signal according to the comparison result, a second halftoning unit (320) to compare the first image data to the M^{th} dithering gradation and to generate a second control signal according to the comparison result, and a third halftoning unit (340) to output a *k^{th}* output gradation, where k is an integer in a range of 1< *k* <M+1, corresponding to the calculated trend of change and calculated ratio as the second image data in response to the first and second control signals.

## Description

The present general inventive concept relates to halftoning, and more particularly, to a halftoning apparatus and method, in which the number of available gradations to halftone image data is equal to or greater than 3 by comparing the image data to be halftoned to a dithering matrix a maximum of two times.

Halftoning is a process of changing a number of available gradations to represent image data, and gradation indicates a level of contrast. The halftoning process is achieved by comparing image data to a dithering matrix, wherein an arranged pattern of pixels of the compared image data is the same as a pattern of the dithering matrix.

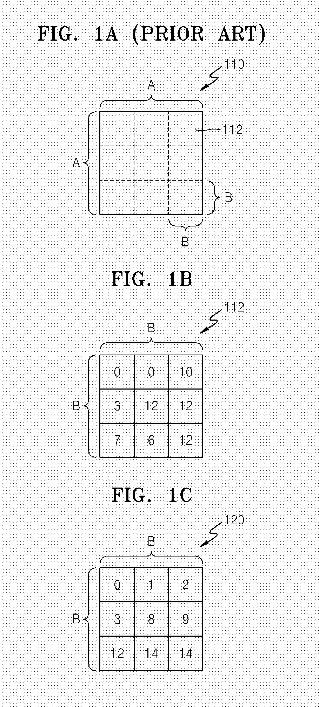

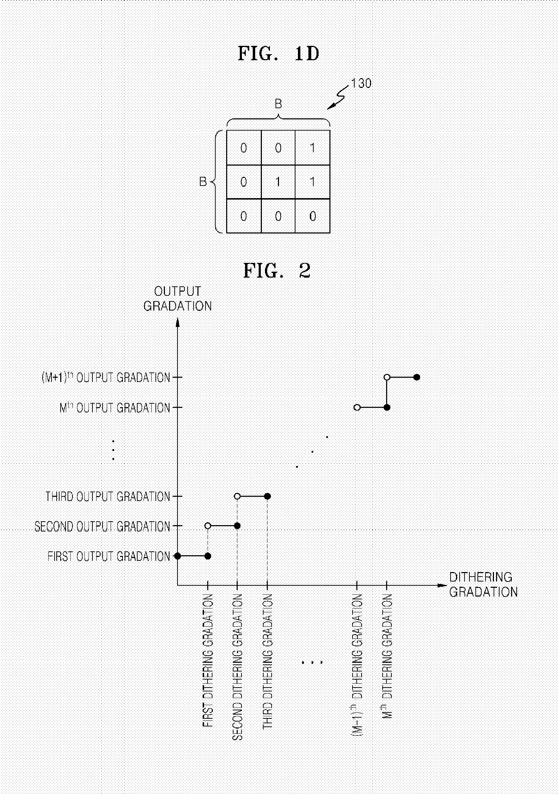

FIGS. 1A through 1D are diagrams illustrating a conventional halftoning principle. In FIGS. 1A through 1D, A denotes 9 pixels, and B denotes 3 pixels. That is, image data 110 includes 9x9 pixels, and a dithering matrix 120 is a 3x3 matrix.

FIG. 1A illustrates the image data 110. In FIG. 1A, it is assumed that original gradations of the image data 110 to be halftoned are 0 through 15 and available gradations to halftone image data are 0 and 1. In this case, a conventional halftoning apparatus creates image data in which a number of available gradations to halftone is 2 by halftoning the image data 110 in which a number of original gradations is 16.

FIGS. 1B through 1D are diagrams illustrating a principle of halftoning partial image data 112, which is a portion of the image data 110, using the dithering matrix 120.

Referring to FIGS. 1B through 1D, halftoned image data 130 is created by comparing the image data 112 to be halftoned to the dithering matrix 120. In detail, if an element value of the image data 112 to be halftoned is equal to or less than an element value of the dithering matrix 120, an element value of the halftoned image data 130 is determined to be 0, wherein 0 can denote white. If an element value of the image data 112 to be halftoned is greater than an element value of the dithering matrix 120, an element value of the halftoned image data 130 is determined to be 1, wherein 1 can denote black.

A larger number of available gradations to halftone image data need a larger number of dithering matrices. In detail, if the number of available gradations to halftone image data is X (where X is an integer equal to or greater than 2), a number of dithering matrices needed for the halftoning process is X-1.

Thus a larger number of dithering matrices requires a larger number of comparisons between image data to be halftoned and a dithering matrix. That is, a conventional halftoning apparatus cannot quickly perform the halftoning process if the number of available gradations to halftone image data increases.

The present invention provides a halftoning apparatus, wherein the number of available gradations to halftone image data is equal to or greater than 3 by comparing image data to be halftoned to a dithering matrix a maximum of two times.

The present invention also provides a halftoning method, wherein the number of available gradations to halftone image data is equal to or greater than 3 by comparing image data to be halftoned to a dithering matrix a maximum of two times.

The present invention also provides a computer readable recording medium to store programs to execute the halftoning method.

Additional aspects and advantages of the present general inventive concept will be set forth in part in the description which follows and, in part, will be obvious from the description, or may be learned by practice of the general inventive concept.

According to the present invention there is provided an apparatus and method as set forth in the appended claims. Preferred features of the invention will be apparent from the dependent claims, and the description which follows.

According to an aspect of the present invention there is provided a halftoning apparatus to create second image data having available gradations of first through (M+1)^{th} output gradations, where M is an integer equal to or greater than 2, by halftoning first image data, the halftoning apparatus including: a calculator to calculate a trend of change of first through M^{th} dithering gradations, where *a^{th}* dithering gradation < (α+1)*^{th}* dithering gradation, and to calculate a ratio of a difference between the first image data and the first dithering gradation to a difference between the M^{th} dithering gradation and the first image data, a first halftoning unit to compare the first image data to the first dithering gradation and to generate a first control signal according to the comparison result, a second halftoning unit to compare the first image data to the M^{th} dithering gradation and to generate a second control signal according to the comparison result, and a third halftoning unit to output a *k^{th}* output gradation, where k is an integer in a range of 1<k<M+1, corresponding to the trend of change and the ratio calculated by the calculator as the second image data in response to the first and second control signals.

According to an aspect of the present invention there is provided a halftoning method for creating second image data having available gradations of first through (M+1)^{th} output gradations, where M is an integer equal to or greater than 2, by halftoning first image data, the halftoning method including: calculating a trend of change of first through M^{th} dithering gradations, where *a^{th}* dithering gradation < (*a*+1)*^{th}* dithering gradation, and calculating a ratio of a difference between the first image data and the first dithering gradation to a difference between the M^{th} dithering gradation and the first image data, determining whether the first image data is greater than the first dithering gradation and equal to or less than the M^{th} dithering gradation, and if it is determined that the first image data is greater than the first dithering gradation and equal to or less than the M^{th} dithering gradation, determining a *k^{th}* output gradation, where k is an integer in a range of 1<k<M+1, corresponding to a calculated trend of change and calculated ratio as second image data.

According to an aspect of the present invention there is provided a computer readable recording medium to store programs to execute a halftoning method to create second image data having available gradations of first through (M+1)^{th} output gradations, where M is an integer equal to or greater than 2, by halftoning first image data, the halftoning method including: calculating a trend of change of first through M^{th} dithering gradations, where *a^{th}* dithering gradation < (*a+*1)^{th} dithering gradation, and calculating a ratio of a difference between the first image data and the first dithering gradation to a difference between the M^{th} dithering gradation and the first image data, determining whether the first image data is greater than the first dithering gradation and equal to or less than the M^{th} dithering gradation, and if it is determined that the first image data is greater than the first dithering gradation and equal to or less than the

M^{th} dithering gradation, determining a *k^{th}* output gradation, where k is an integer in a range of 1<k<M+1, corresponding to the calculated trend of change and the calculated ratio as the second image data.

According to an aspect of the present invention there is provided a halftoning apparatus including a calculator to calculate a trend of change of first through M^{th} dithering gradations and a ratio of a difference between first image data and the first dithering gradation to a difference between the M^{th} dithering gradation, a halftoning unit to generate first and second control signals to halftone the first image data to create second image data according to the first and M^{th} dithering gradations, and a third control signal according to the first image data and the trend of change and the ratio.

According to an aspect of the present invention there is provided a halftoning method including calculating a trend of change of first through M^{th} dithering gradations and a ratio of a difference between first image data and the first dithering gradation to a difference between the M^{th} dithering gradation, generating first and second control signals to halftone the first image data to create second image data according to the first and M^{th} dithering gradations, and a third control signal according to the first image data and the trend of change and the ratio.

According to an aspect of the present invention there is provided a halftoning apparatus including a storage unit to store a first dithering gradation, middle dithering gradations, and a last dithering gradation, and a halftone unit to compare first image data with the first and last dithering gradations to generate first and second control signals to halftone the first image data to create second image data, to select one of the middle dithering gradations as an output gradation based on a trend of change of the first through last dithering gradations, and to output halftoned second image data having the output gradation according to the first and second control signals, the first image data, and the trend of change of the first through last dithering gradation.

According to an aspect of the present invention there is provided a computer readable recording medium to store programs to execute a halftoning method, the halftoning method including calculating a trend of change of first through M^{th} dithering gradations and a ratio of a difference between first image data and the first dithering gradation to a difference between the M^{th} dithering gradation, generating first and second control signals to halftone the first image data to create second image data according to the first and M^{th} dithering gradations, and a third control signal according to the first image data and the trend of change and the ratio.

For a better understanding of the invention, and to show how embodiments of the same may be carried into effect, reference will now be made, by way of example, to the accompanying diagrammatic drawings in which:
FIGS. 1A through 1D are diagrams illustrating a conventional halftoning principle;
FIG. 2 is a diagram illustrating a correlation among dithering gradations, output gradations, and a halftoning process;
FIG. 3 is a block diagram illustrating a halftoning apparatus according to an embodiment of the present general inventive concept;
FIGS. 4A through 4M are diagrams illustrating the halftoning apparatus illustrated in FIG. 3, according to an embodiment of the present general inventive concept; and
FIG. 5 is a flowchart illustrating a halftoning method according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

FIG. 2 is a diagram illustrating a correlation between dithering gradations, output gradations, and a halftoning process usable in an image signal processing apparatus and an image forming apparatus.

A halftoning apparatus according to an embodiment of the present general inventive concept creates second image data by halftoning first image data. That is, the first image data indicates image data to be halftoned, and the second image data indicates halftoned image data.

For convenience of description, it is assumed that the number of original gradations of the first image data is N and the number of available gradations of the second image data is M+1. In detail, the second image data can be one of first through (M+1)^{th} output gradations. Herein, M is an integer equal to or greater than 2, and N is an integer (N≥M). Each of the first through (M+1)^{th} output gradations may be previously set.

Since the number of available gradations of the second image data is M+1, the number of dithering matrices required for a halftoning process is M. Hereinafter, M dithering matrices include a first dithering matrix, a second dithering matrix, a third dithering matrix, ..., an (M-1)^{th} dithering matrix, and an M^{th} dithering matrix.

In the present embodiment, a dithering gradation indicates an element value of a dithering matrix. For example, if a dithering matrix is a 2x2 matrix, the dithering matrix includes 4 dithering gradations indicating an element value at (1, 1), an element value at (1, 2), an element value at (2, 1), and an element value at (2, 2), wherein (x, y) = (row, column). That is, an m^{th} (where m is an integer in a range of 1≤m≤M) dithering gradation indicates an element value of an m^{th} dithering matrix.

For a single element value at a single location of a dithering matrix, an *a^{th}* dithering gradation is less than an (*α*+1)*^{th}* dithering gradation (*α* is an integer in a range of 1≤α≤M-1). That is, for a single element value of a dithering matrix at a single location of a dithering matrix, a minimum value is a first dithering gradation and a maximum value is an M^{th} dithering gradation, from the first through M^{th} dithering gradations. "Location" indicates an element defined by a crossing point of a specific row and a specific column in a dithering matrix.

For example, if the m^{th} dithering matrix is a 3x3 matrix, the minimum value is the first dithering gradation and the maximum value is the M^{th} dithering gradation, from the first through M^{th} dithering gradations for a single element value corresponding to a location where (row, column) = (1, 2). Likewise, the minimum value is the first dithering gradation and the maximum value is the M^{th} dithering gradation, from the first through M^{th} dithering gradations for a single element value corresponding to a location where (row, column) = (3, 1). The same manner is applied to dithering gradations for single element values corresponding to locations where (row, column) = (1, 1), (1, 3), (2, 1), (2, 2), (2, 3), (3, 2), and (3, 3).

In FIG. 2, first through M^{th} dithering gradations are element values at the same locations of the first through M^{th} dithering matrices. A halftoning principle will be described with reference to FIG. 2.

If the first image data is equal to or less than the first dithering gradation, the second image data is a first output gradation. If the first image data is greater than a (p-1)^{th} (2≤p≤M) dithering gradation and equal to or less than a p^{th} dithering gradation, the second image data is a p^{th} output gradation. If the first image data is greater than the M^{th} dithering gradation, the second image data is an (M+1)^{th} output gradation. As described above, the number of dithering matrices required to halftone the first image data is M.

A conventional halftoning apparatus must compare the first image data to the dithering matrices a maximum of M times in order to create the second image data. That is, the conventional halftoning apparatus may compare the first image data to each of the first through M^{th} dithering gradations in order to create the second image data. For example, the first image data is compared to the *a^{th}* dithering gradation before being compared to the (*a*+1)*^{th}* dithering gradation, and if the first image data is greater than the M^{th} dithering gradation, the conventional halftoning apparatus must compare the first image data to each of the first through M^{th} dithering gradations.

However, the halftoning apparatus according to an embodiment of the present general inventive concept compares the first image data to the dithering matrices a maximum of two times in order to create the second image data.

According to an embodiment of the present general inventive concept, the halftoning apparatus compares the first image data to the first dithering gradation, and if the first image data is equal to or less than the first dithering gradation according to the comparison result, the halftoning apparatus outputs the first output gradation as the second image data.

If the first image data is greater than the first dithering gradation as the comparison result, the halftoning apparatus compares the first image data to the M^{th} dithering gradation, and if the first image data is greater than the M^{th} dithering gradation according to the comparison result, the halftoning apparatus outputs the (M+1)^{th} output gradation as the second image data.

If the first image data is equal to or less than the M^{th} dithering gradation according to the comparison result, the halftoning apparatus outputs a k^{th} (k is an integer in a range of 1<k<M+1) output gradation as the second image data. To perform the comparisons, the halftoning apparatus calculates a trend of change of the first through M^{th} dithering gradations and calculates a ratio of a difference between the first image data and the first dithering gradation to a difference between the M^{th} dithering gradation and the first image data.

In the present embodiment, the k^{th} output gradation previously matches a k^{th} dithering gradation. In addition, the k^{th} dithering gradation indicates a dithering gradation most approximate to the first image data and is calculated considering the calculated trend of change and the calculated ratio detailed above.

Thus, according to an embodiment of the present general inventive concept, the comparison of the first image data to the dithering matrices, which is required to create the second image data, is performed a maximum of two times.

According to another embodiment of the present general inventive concept, the halftoning apparatus compares the first image data to the M^{th} dithering gradation, and if the first image data is greater than the M^{th} dithering gradation according to the comparison result, the halftoning apparatus outputs the (M+1)^{th} output gradation as the second image data.

If the first image data is equal to or less than the M^{th} dithering gradation as the comparison result, the halftoning apparatus compares the first image data to the first dithering gradation, and if the first image data is equal to or less than the first dithering gradation according to the comparison result, the halftoning apparatus outputs the first output gradation as the second image data.

If the first image data is greater than the first dithering gradation according to the comparison result, the halftoning apparatus outputs a k^{th} output gradation as the second image data. To perform the comparisons, the halftoning apparatus calculates a trend of change of the first through M^{th} dithering gradations and calculates a ratio of a difference between the first image data and the first dithering gradation to a difference between the M^{th} dithering gradation and the first image data.

Thus, according to another embodiment of the present general inventive concept, the comparison of the first image data to the dithering matrices, which is required to create the second image data, is performed a maximum of two times.

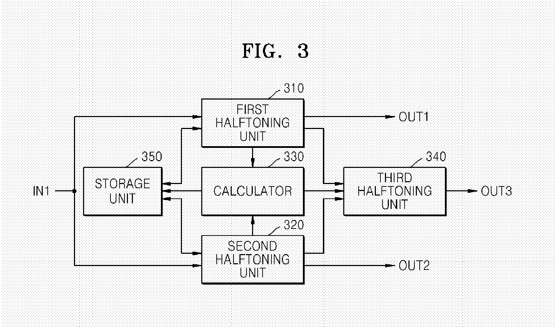

FIG. 3 is a block diagram illustrating the halftoning apparatus according to an embodiment of the present general inventive concept. Referring to FIG. 3, the halftoning apparatus includes a first halftoning unit 310, a second halftoning unit 320, a calculator 330, a third halftoning unit 340, and a storage unit 350.

The halftoning apparatus can be included in an image forming device such as a printer or a multi-function peripheral (MFP) device having a print function.

The first halftoning unit 310 compares first image data input through an input terminal IN1 to a first dithering gradation and generates a first control signal according to the comparison result. In detail, the first halftoning unit 310 compares the first image data to the first dithering gradation, and if the first image data is equal to or less than the first dithering gradation according to the comparison result, the first halftoning unit 310 outputs a first output gradation through an output terminal OUT1 as second image data, and if the first image data is greater than the first dithering gradation as the comparison result, the first halftoning unit 310 generates a first control signal. The first halftoning unit 310 outputs the generated first control signal to the third halftoning unit 340, wherein the first halftoning unit 310 may also output the generated first control signal to the calculator 330. The first halftoning unit 310 may also output the generated first control signal to the second halftoning unit 320. In this case, the second halftoning unit 320 may operate in response to the first control signal.

Likewise, the second halftoning unit 320 compares the first image data input through the input terminal IN1 to an M^{th} dithering gradation and generates a second control signal according to the comparison result. In detail, the second halftoning unit 320 compares the first image data to the M^{th} dithering gradation, and if the first image data is greater than the M^{th} dithering gradation according to the comparison result, the second halftoning unit 320 outputs an (M+1)^{th} output gradation through an output terminal OUT2 as the second image data, and if the first image data is equal to or less than the M^{th} dithering gradation as the comparison result, the second halftoning unit 320 generates a second control signal. The second halftoning unit 320 outputs the generated second control signal to the third halftoning unit 340, wherein the second halftoning unit 320 may also output the generated second control signal to the calculator 330. The second halftoning unit 320 may also output the generated second control signal to the first halftoning unit 310. In this case, the first halftoning unit 310 may operate in response to the second control signal.

The calculator 330 calculates a trend of change of the first through M^{th} dithering gradations. The first through M^{th} dithering gradations are possible element values of a single location of a dithering matrix.

The trend of change of the first through M^{th} dithering gradations provides answers in response to the questions 'how large is the difference between the first dithering gradation and a second dithering gradation?', 'how large is the difference between the second dithering gradation and a third dithering gradation?', ..., and 'how large is the difference between an (M-1)^{th} dithering gradation and the M^{th} dithering gradation?'.

Thus, the trend of change of the first through M^{th} dithering gradations shows a graph form having 'm' as a horizontal axis and 'dithering gradation' as a vertical axis. For example, the graph form can be a linear function form or a quadratic function form.

The trend of change can differ according to locations of dithering matrices. In this case, the calculator 330 calculates a trend of change with respect to each location of the dithering matrices, calculates a mean value of the calculated trend of changes, and outputs the calculated mean value as the trend of change of the first through M^{th} dithering gradations. That is, the trend of change calculated by the calculator 330 can indicate 'a trend of change at a certain location of the dithering matrices' or 'a mean trend of change'.

As described above, a condition of *α^{th}* dithering gradation < (α +1)^{th} dithering gradation' is applicable at every location of the dithering matrices. That is an m^{th} dithering gradation is greater than an (m-1)^{th} dithering gradation.

The calculator 330 also calculates a difference between the first image data and the first dithering gradation and a difference between the M^{th} dithering gradation and the first image data. The calculator 330 also calculates a ratio of the calculated difference between the first image data and the first dithering gradation to the calculated difference between the M^{th} dithering gradation and the first image data.

The calculator 330 may operate in response to the first control signal and the second control signal.

The third halftoning unit 340 operates in response to the first control signal and the second control signal.

In detail, the third halftoning unit 340 outputs a k^{th} output gradation corresponding to the calculated trend of change and calculated ratio as the second image data in response to the first and second control signals. In more detail, the third halftoning unit 340 calculates a k^{th} dithering gradation and outputs the k^{th} output gradation corresponding to the calculated k^{th} dithering gradation through an output terminal OUT3 as the second image data. Herein, the third halftoning unit 340 calculates the k^{th} dithering gradation using the calculated trend of change and the calculated ratio.

The storage unit 350 may store a first dithering matrix, an M^{th} dithering matrix, and information on the calculated trend of change. In this case, the first halftoning unit 310 can perform the halftoning process using the first dithering matrix stored in the storage unit 350. Likewise, the second halftoning unit 320 can perform the halftoning process using a second dithering matrix stored in the storage unit 350. The third halftoning unit 340 can perform the halftoning process using the first dithering matrix, the second dithering matrix, and the information on the calculated trend of change, which are stored in the storage unit 350.

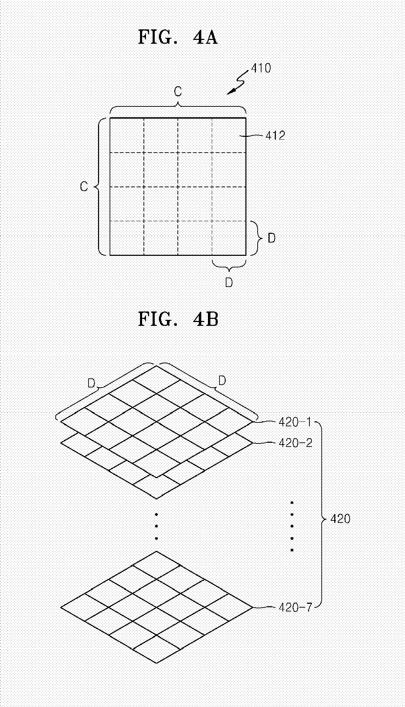

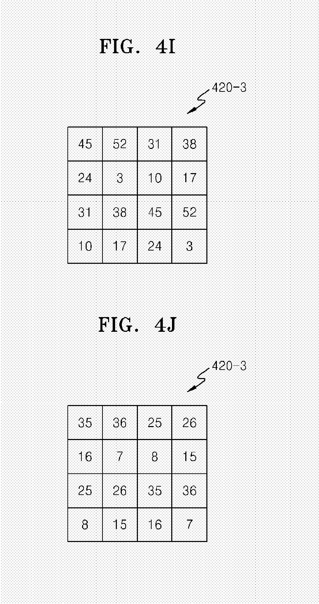

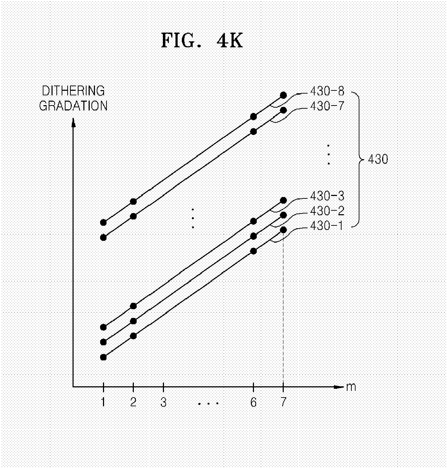

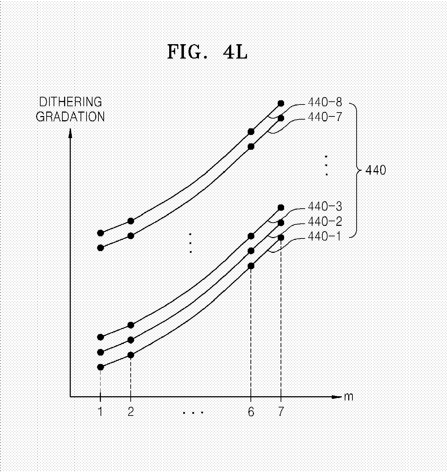

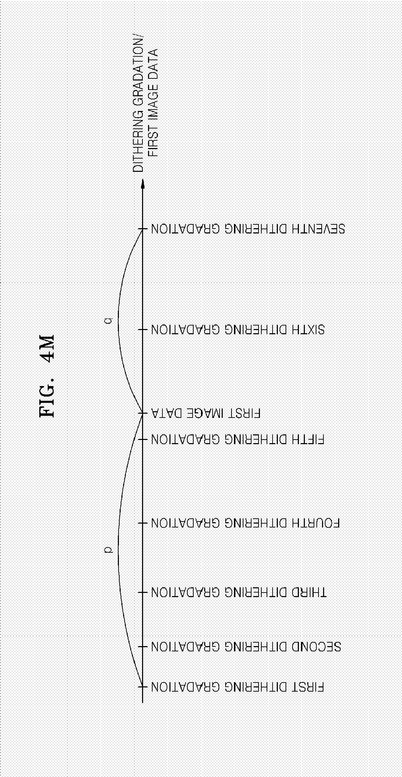

FIGS. 4A through 4M are diagrams illustrating the operation of the halftoning apparatus illustrated in FIG. 3, according to an embodiment of the present general inventive concept. In FIGS. 4A through 4M, it is assumed that N=64, M=7, C=16, and D=4. In this case, available gradations of second image data are first through eighth output gradations, first image data 410 is constituted by a 16x16 array of pixels, and a dithering matrix 420 is a 4x4 matrix. Here M is a number of dithering matrices, C is a size of a pixel array, D is a size of a dithering matrix, and N = C * D.

Referring to FIGS. 4A and 4B, a principle of halftoning the first image data 410 using the dithering matrix 420 will be described by explaining a principle of halftoning partial first image data 412, which is a portion of the first image data 410.

The number of dithering matrices required to perform the halftoning process is 7. The 7 dithering matrices are a first dithering matrix H1 420-1, a second dithering matrix H2 420-2, ..., and a seventh dithering matrix H7 420-7, wherein an m^{th} dithering matrix Hm 420-m is constituted of 16 elements.

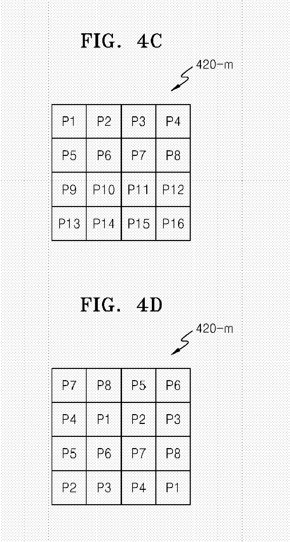

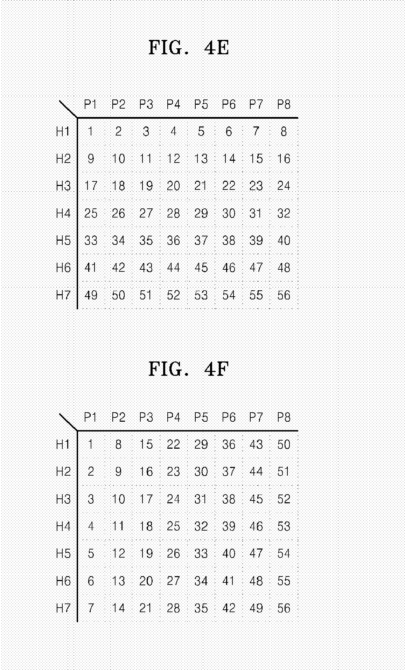

Each of the 16 elements can be matched with identification information corresponding to a location of the element. For example, 16 elements of the m^{th} dithering matrix Hm 420-m can be matched with 16 pieces of identification information P1 through P16 as illustrated in FIG. 4C or less than 16, e.g., 8, pieces of identification information P1 through P8 as illustrated in FIG. 4D. FIGS. 4E through 4M will now be described with reference to FIG. 4D.

FIGS. 4E through 4G illustrate examples of a source table to be completed by a user. Here, the source table is a table, a horizontal axis of which denotes identification information P1 through P8 and a vertical axis of which denotes dithering matrices H1 through H7.

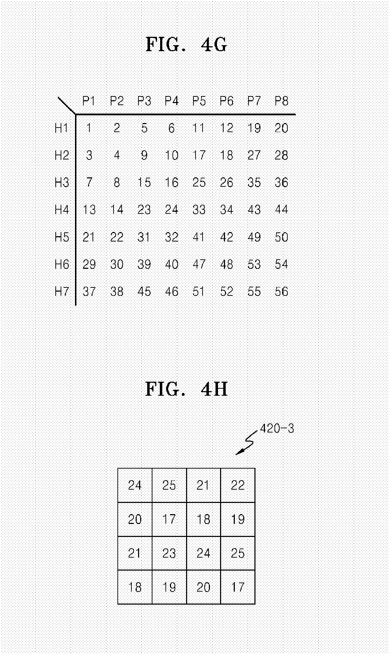

The user completes the source table by filling numerals 1 through 56 in the source table so that the numerals have a certain pattern. For example, the user can complete the source table illustrated in FIG. 4E by sequentially filling numerals 1 through 56 in the source table in a horizontal direction. The user can also complete the source table illustrated in FIG. 4F by sequentially filling numerals 1 through 56 in the source table in a vertical direction. The user can also complete the source table illustrated in FIG. 4G by sequentially filling numerals 1 through 56 in the source table in a diagonal direction.

The user can create first through M^{th} dithering matrices using such a source table. In another method, a dithering matrix creator (not shown) can automatically create the first through M^{th} dithering matrices by receiving numerals of a source table. The created dithering matrices are input to the calculator 330 to calculate a trend of change of the first through M^{th} dithering matrices.

FIGS. 4H through 4J illustrate examples of the third dithering matrix H3 420-3 of the first through seventh dithering matrices 420-1 through 420-7 created using the source tables illustrated in FIGS. 4E through 4G. In detail, FIG. 4H shows the third dithering matrix H3 420-3 created using the source table illustrated in FIG. 4E, FIG. 41 shows the third dithering matrix H3 420-3 created using the source table illustrated in FIG. 4F, and FIG. 4J shows the third dithering matrix H3 420-3 created using the source table illustrated in FIG. 4G.

FIGS. 4K and 4L are graphs illustrating dithering gradations, a horizontal axis of which denotes 'm' and a vertical axis of which denotes 'dithering gradation'.

In detail, FIG. 4K illustrates the graph 430 showing first through seventh dithering gradations created using the source table illustrated in FIG. 4E or 4F. Herein, since the first through seventh dithering gradations differ according to the identification information P1 through P8, the graph 430 is constituted of 8 plots corresponding to 430-1, 430-2, ..., and 430-8.

In this case, the calculator 330 calculates slopes of the 8 plots 430-1, 430-2, ..., and 430-8, calculates a mean slope of the calculated slopes, and outputs the calculated mean slope as 'the trend of change of the first through seventh dithering gradations'. That is, the trend of change calculated by the calculator 330 can indicate one of the calculated 8 slopes or the mean slope.

FIG. 4L illustrates the graph 440 showing first through seventh dithering gradations created using the source table illustrated in FIG. 4G. Herein, since the first through seventh dithering gradations differ according to the identification information P1 through P8, the graph 440 is constituted of 8 plots corresponding to 440-1, 440-2, ..., and 440-8.

In this case, the calculator 330 calculates trend of changes of the first through seventh dithering gradations, i.e., 'how large is the difference between the first dithering gradation and a second dithering gradation?', 'how large is the difference between the second dithering gradation and a third dithering gradation?', ..., and 'how large is the difference between a sixth dithering gradation and the seventh dithering gradation?', for each of the 8 plots 440-1, 440-2, ..., and 440-8, calculates a mean trend of change of the calculated 8 trend of changes, and outputs the calculated trend of change as 'the trend of change of the first through seventh dithering gradations'. That is, the trend of change calculated by the calculator 330 can indicate one of the calculated 8 trend of changes or the mean trend of change.

FIG. 4M is a graph illustrating the halftoning process performed in the third halftoning unit 340. For convenience of description, it is assumed that the dithering gradations compared to the first image data by the first halftoning unit 310 and the second halftoning unit 320 are dithering gradations with respect to the identification information P3. It is also assumed that the first image data is a certain value greater than the first dithering gradation and equal to or less than the seventh dithering gradation.

In this case, the calculator 330 calculates a trend of change of the first through seventh dithering gradations with respect to the identification information P3. The calculator 330 also calculates a difference p between the first image data and the first dithering gradation with respect to the identification information P3 and a difference q between the first image data and the seventh dithering gradation with respect to the identification information P3. The calculator 330 also calculates a ratio *(p :q)* of the calculated differences.

If the trend of change of the first through seventh dithering gradations is calculated, even though dithering matrices stored in the halftoning apparatus according to an embodiment of the present general inventive concept are only first and seventh dithering matrices of first through seventh dithering matrices granted to the calculator 330, the third halftoning unit 340 can calculate second through sixth dithering gradations using the first dithering gradation, the seventh dithering gradation, and the calculated trend of change. The second through sixth dithering gradations illustrated in FIG. 4M indicate dithering gradations, which are calculated by the third halftoning unit 340. Although the third halftoning unit 340 can calculate all of the second through sixth dithering gradations, the third halftoning unit 340 may calculate only a gradation closest to the first image data using the ratio calculated by the calculator 330. Thus, in FIG. 4M, the third halftoning unit 340 determines a fifth dithering gradation as a k^{th} dithering gradation using the calculated trend of change and calculated ratio and determines a fifth output gradation as a k^{th} output gradation. That is, in FIG. 4M, the third halftoning unit 340 outputs the fifth dithering gradation as second image data. Even though the third halftoning unit 340 creates the second image data by halftoning the first image data, this halftoning process differs from the halftoning process in which the first image data is compared to each of dithering matrices, and thus this halftoning process differs from the halftoning process performed by the first halftoning unit 310 or the second halftoning unit 320.

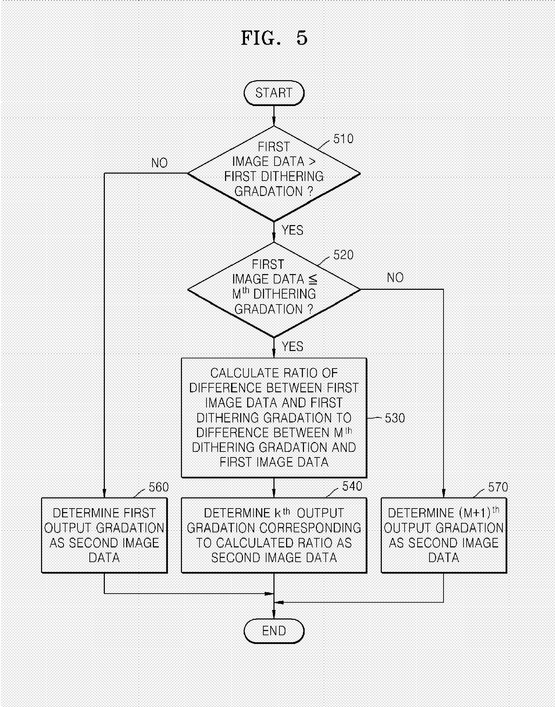

FIG. 5 is a flowchart illustrating a halftoning method according to an embodiment of the present general inventive concept. Referring to FIG. 5, the halftoning method includes allowing the number of available gradations for halftoning image data to be equal to or greater than 3 by comparing image data to be halftoned to a dithering matrix a maximum of two times (operations 510 through 570).

The first halftoning unit 310 determines in operation 510 whether first image data is greater than a first dithering gradation.

If it is determined in operation 510 that the first image data is greater than the first dithering gradation, the second halftoning unit 320 determines in operation 520 whether the first image data is equal to or less than an M^{th} dithering gradation. Here, operation 520 can be performed after operation 510 as illustrated in FIG. 5, or unlike FIG. 5, operation 520 can be performed before operation 510 or at the same time as operation 510. If operation 520 is performed before operation 510, operation 510 is performed if it is determined in operation 520 that the first image data is equal to or less than the M^{th} dithering gradation, and operation 530 described below is further performed if it is determined in operation 510 that the first image data is greater than the first dithering gradation. For convenience of description, it is assumed that operation 520 is performed after operation 510 as illustrated in FIG. 5.

If it is determined in operation 520 that the first image data is equal to or less than the M^{th} dithering gradation, the calculator 330 calculates a ratio of a difference between the first image data and the first dithering gradation to a difference between the M^{th} dithering gradation and the first image data in operation 530. The calculator 330 also calculates a trend of change of the first through M^{th} dithering gradations. However, the calculator 330 may calculate the trend of change if it is determined in operation 520 that the first image data is equal to or less than the M^{th} dithering gradation or may calculate the trend of change prior to operation 510.

The third halftoning unit 340 determines a k^{th} output gradation corresponding to the calculated trend of change and calculated ratio as second image data in operation 540.

If it is determined in operation 510 that the first image data is equal to or less than the first dithering gradation, the first halftoning unit 310 determines a first output gradation as the second image data in operation 560.

If it is determined in operation 520 that the first image data is greater than the M^{th} dithering gradation, the second halftoning unit 320 determines a second output gradation as the second image data in operation 570.

The present general inventive concept can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments to accomplish the present general inventive concept can be easily construed by programmers skilled in the art to which the present general inventive concept pertains. The method illustrated in FIG. 5 can be stored in the computer-recorded medium in a form of computer-readable codes to perform the method when the computer reads the computer-readable codes of the recording medium.

As described above, since a halftoning apparatus and method according to embodiments of the present general inventive concept allows a number of available gradations to halftone image data to be equal to or greater than 3 by comparing image data to be halftoned to a dithering matrix a maximum of two times, a halftoning process can be quickly completed even though the number of available gradations to halftone image data is large. Moreover, since a number of dithering matrices required to be stored in the halftoning apparatus can be equal to or less than 2 regardless of the number of available gradations to halftone image data, storage space needed in the halftoning apparatus can be minimized, thereby securing price competitiveness of the halftoning apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A halftoning apparatus to halftone first image data and create second image data, the halftoning apparatus comprising:
a calculator (330) to calculate a trend of change of first through M^{th} dithering gradations, where *a^{th}* dithering gradation < (a+1)*^{th}* dithering gradation, and to calculate a ratio of a difference between the first image data and the first dithering gradation to a difference between the M^{th} dithering gradation and the first image data;
a first halftoning unit (310) to compare the first image data to the first dithering gradation and to generate a first control signal in response to the comparison result obtained by the first halftoning unit (310);
a second halftoning unit (320) to compare the first image data to the M^{th} dithering gradation and to generate a second control signal in response to the comparison result obtained by the second halftoning unit (320); and
a third halftoning unit (340) to output the *k^{th}* output gradation, where k is an integer in a range of 1<*k*<M+1, corresponding to the trend of change and the ratio calculated by the calculator (330) as the second image data in response to the first and second control signals,
wherein the second image data has a gradation of first through (M+1) ^{th} output gradations, and M is an integer greater than or equal to or greater than 2.

2. The halftoning apparatus of claim 1, wherein the third halftoning unit (340) is operable to calculate a *k^{th}* dithering gradation most approximate to the first image data by using the trend of change and the ratio calculated by the calculator (330), and to output the *k^{th}* output gradation corresponding to the calculated *k^{th}* dithering gradation as the second image data.

3. The halftoning apparatus of claim 1 or claim 2, wherein:
the first halftoning unit (310) is operable to compare the first image data to the first dithering gradation and to output the first output gradation as the second image data in response to the comparison result obtained by the first halftoning unit (310); and
the second halftoning unit (320) is operable to compare the first image data to the M^{th} dithering gradation and to output an (M+1)^{th} output gradation as the second image data in response to the comparison result obtained by the second halftoning unit (320).

4. The halftoning apparatus of any preceding claim, wherein the calculator (330) is adapted to operate in response to the first and second control signals.

5. A halftoning method of halftoning first image data and creating second image data, the halftoning method comprising:
calculating a trend of change of first through M^{th} dithering gradations, where *a^{th}* dithering gradation < (a+1)^{th} dithering gradation, and calculating a ratio of a difference between the first image data and the first dithering gradation to a difference between the M^{th} dithering gradation and the first image data;
determining whether the first image data is greater than the first dithering gradation and equal to or less than the M^{th} dithering gradation; and
if it is determined that the first image data is greater than the first dithering gradation and equal to or less than the M^{th} dithering gradation, determining a *k^{th}* output gradation, where k is an integer in a range of 1<*k*<M+1, corresponding to the calculated trend of change and the calculated ratio as the second image data,
wherein the second image data has gradations of first through (M+1)^{th} output gradations, and M is an integer greater than or equal to 2.

6. The halftoning method of claim 5, wherein the determining of the *k^{th}* output gradation comprises:
calculating a *k^{th}* dithering gradation most approximate to the first image data by using the calculated trend of change and the calculated ratio; and
determining the *k^{th}* output gradation corresponding to the calculated *k^{th}* dithering gradation as the second image data.

7. The halftoning method of claim 5 or claim 6, further comprising:
if it is determined that the first image data is equal to or less than the first dithering gradation, determining the first output gradation as the second image data; and
if it is determined that the first image data is greater than the M^{th} dithering gradation, determining an (M+1)^{th} output gradation as the second image data.

8. The halftoning method of any one of claims 5 to 7, wherein the calculating is performed if it is determined that the first image data is greater than the first dithering gradation and equal to or less than the M^{th} dithering gradation.

9. A computer readable recording medium to store programs to execute a halftoning method of halftoning first image data and creating second image data, the halftoning method comprising:
calculating a trend of change of first through M^{th} dithering gradations, where *a^{th}* dithering gradation < (*a*+1)*^{th}* dithering gradation, and calculating a ratio of a difference between the first image data and the first dithering gradation to a difference between the M^{th} dithering gradation and the first image data;
determining whether the first image data is greater than the first dithering gradation and equal to or less than the M^{th} dithering gradation; and
if it is determined that the first image data is greater than the first dithering gradation and equal to or less than the M^{th} dithering gradation, determining a *k^{th}* output gradation, where k is an integer in a range of 1<*k*<M+1, corresponding to the calculated trend of change and the calculated ratio as the second image data,
wherein the second image data has gradations of first through (M+1)^{th} output gradations, and M is an integer greater than or equal to 2.

10. A halftoning apparatus comprising:
a calculator (330) to calculate a trend of change of first through M^{th} dithering gradations and a ratio of a difference between first image data and the first dithering gradation to a difference between the M^{th} dithering gradation;
a halftoning unit to generate first and second control signals to halftone the first image data to create second image data according to the first and M^{th} dithering gradations, and a third control signal according to the first image data and the trend of change and the ratio.

11. The halftoning apparatus of claim 10, wherein the halftoning unit comprises:
a first halftoning unit (310) to compare the first image data to the first dithering gradation using a first dithering matrix and to produce the first control signal;
a second halftoning unit (320) to compare the first image data to the M^{th} dithering gradation using an M^{th} dithering matrix and to produce the second control signal; and
a third halftoning unit (340) to output the second image data based on the first image data and the first, second, and third control signals.

12. The halftoning apparatus of claim 10 or claim 11, further comprising a storage unit to store the first dithering matrix, the M^{th} dithering matrix, and the calculated trend of change and the ratio.

13. The halftoning apparatus of any one of claims 10 to 12, wherein the outputted second image data has available gradations of first through (M+1)^{th} output gradations, where M is an integer equal to or greater than 2.

14. The halftoning apparatus of claim 13, wherein an output gradation is a *k^{th}* output gradation, where k is an integer in a range of 1<*k*<M+1.

15. A halftoning method, comprising:
calculating a trend of change of first through M^{th} dithering gradations and a ratio of a difference between first image data and the first dithering gradation to a difference between the M^{th} dithering gradation; and
generating first and second control signals to halftone the first image data to create second image data according to the first and M^{th} dithering gradations, and a third control signal according to the first image data and the trend of change and the ratio.

16. The halftoning method of claim 15, further comprising:
comparing the first image data to the first dithering gradation using a first dithering matrix to produce the first control signal;
comparing the first image data to the M^{th} dithering gradation using an M^{th} dithering matrix to produce the second control signal; and
outputting the second image data based on the first image data and the first, second, and third control signals.

17. The halftoning method of claim 15 or claim 16, further comprising storing the first dithering matrix, the M^{th} dithering matrix, and the calculated trend of change and the ratio in a storage unit.

18. The halftoning method of claim 16, wherein the outputted second image data has available gradations of first through (M+1)^{th} output gradations, where M is an integer equal to or greater than 2.

19. The halftoning method of claim 18, wherein an output gradation is a *k^{th}* output gradation, where k is an integer in a range of 1<k<M+1.

20. A halftoning apparatus comprising:
a storage unit to store a first dithering gradation, middle dithering gradations, and a last dithering gradation; and
a halftone unit to compare first image data with the first and last dithering gradations to generate first and second control signals to halftone the first image data to create second image data, to select one of the middle dithering gradations as an output gradation based on a trend of change of the first through last dithering gradations, and to output halftoned second image data having the output gradation according to the first and second control signals, the first image data, and the trend of change of the first through last dithering gradations.

21. The halftoning apparatus of claim 20, wherein the storage unit is operable to additionally store the trend of change of the first through last dithering gradations.

22. A computer readable recording medium to store programs to execute a halftoning method, the halftoning method comprising:
calculating a trend of change of first through M^{th} dithering gradations and a ratio of a difference between first image data and the first dithering gradation to a difference between the M^{th} dithering gradation;
generating first and second control signals to halftone the first image data to create second image data according to the first and M^{th} dithering gradations, and a third control signal according to the first image data and the trend of change and the ratio.
